# EUROPEAN PATENT SPECIFICATION

(11) **EP 3 919 667 B1**
(45) Date of publication and mention of the grant of the patent: **04.10.2023**
(21) Application number: 21187545.5
(22) Date of filing: 27.06.2019
(51) Int. Cl.: D06F 37/04, D06F 37/30

(54) **LAUNDRY TREATING APPARATUS**
WÄSCHEBEHANDLUNGSVORRICHTUNG
APPAREIL DE TRAITEMENT DU LINGE

(30) Priority: 06.07.2018 KR 20180078893
(43) Date of publication of application: 08.12.2021
(62) Divisional of application: 19182819.3
(73) Proprietor: LG Electronics Inc., Seoul 07336 (KR)
(72) Inventor: KWON, Yongdeok, Seoul 08592 (KR)
(74) Representative: Ter Meer Steinmeister & Partner

(56) References cited:
- EP-A1- 2 671 995
- EP-A1- 3 444 392
- KR-A- 20070 106 882
- KR-A- 20090 038 185

## Description

This application claims the benefit of the Korean Patent Application No. 10-2018-0078893, filed on July 06, 2018.

### BACKGROUND OF THE INVENTION

### Field of the Invention

The present invention relates to a laundry treating apparatus.

### Discussion of the Related Art

A laundry treating apparatus includes an apparatus for washing laundry, an apparatus for drying laundry, and an apparatus for performing both washing and drying laundry. Laundry treating apparatuses of the related art are categorized into a front loading type laundry treating apparatus having a laundry inlet provided on a front surface to load laundry therein and a top loading type laundry treating apparatus having a laundry inlet provided on an upper surface to load laundry therein.

In any type, the laundry treating apparatus of the related art is provided to include a tub in which water is stored, a drum provided inside the tub, storing laundry therein, a motor generating a rotation power, and a connector for connecting the drum with the motor to transfer the rotation power of the motor to the drum.

The connector is fixed to a rear surface of the drum in the front loading type laundry treating apparatus, and the connector is fixed to the bottom of the drum in the top loading type laundry treating apparatus. Therefore, the laundry treating apparatuses of the related art have problems in that it is difficult to check whether particles remain in the connector and it is also difficult to clean the connector.

KR 2009 0038185 A presents a shaft flange and a washing machine having the same. The washing machine comprises a spin basket, a motor rotating the spin basket, a shaft rotating with the motor and a shaft flange. The shaft flange connected in the spin basket comprises: a front panel combined in the spin basket; a back plate separated from the front panel in order to face the front panel; and a plurality of main reinforcing rib extended between the front panel and back plate to the radial direction.

### SUMMARY OF THE INVENTION

Accordingly, the present invention is directed to a laundry treating apparatus that substantially obviates one or more problems due to limitations and disadvantages of the related art.

An object of the present invention is to provide a connector, which may minimize particles remaining therein, and a laundry treating apparatus provided with the connector.

Another object of the present invention is to provide a laundry treating apparatus provided with a connector.

Still another object of the present invention is to provide a connector, which stably transfers a rotation power provided by a motor to a drum, and a laundry treating apparatus provided with the connector.

Further still another object of the present invention is to provide a connector, which may minimize a weight, and a laundry treating apparatus provided with the connector.

The objects are solved by the features of the independent claim. Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

According to one aspect, a laundry treating apparatus according to the present invention comprises a tub providing a space in which water is stored; a drum rotatably provided inside the tub in a cylindrical shape, providing a space in which laundry is stored, and having a first surface provided with a drum inlet allowing laundry to be loaded or taken out therethrough, a second surface provided to face the first surface, and a circumferential surface connecting the first surface with the second surface; a first body having a first body hub fixed to the second surface and located in the center of rotation of the drum, and a first body arm extended from the first body hub to a rim of the second surface; a second body having a second body hub located in the tub, to which a rotary shaft of the drum is fixed, and a second body arm extended from the second body hub along the same direction as the direction where the first body arm is extended from the first body hub; and a connecting portion provided to connect the first body with the second body so as to maintain the state that the first body is spaced apart from the second body, forming a path between the first body and the second body to allow water to pass therethrough.

According to another aspect, a laundry treating apparatus comprises a drum rotatably provided inside the laundry treating apparatus for storing laundry; and a connector connecting the drum to a motor for transferring a rotation power to the drum, wherein the connector comprises a rotary shaft, a first body having a first body hub fixed to the drum, and at least one first body arm extending from the first body hub radially outwards; a second body having a second body hub fixed to the rotary shaft, and at least one second body arm extending from the second body hub radially outwards corresponding to the at least one first body arm; and at least one connecting portion connecting the first body with the second body so that the first body is spaced apart from the second body forming paths between the first body and the second body to allow water to pass therethrough. The rotary shaft may define an axis of rotation, i.e. the first and second body arms may extend radially outwards with respect to the axis of rotation. Preferably, the first body hub is fixed to a rear surface of the drum, i.e. a surface opposite to a drum inlet for loading or unloading laundry into the drum. The laundry treating apparatus may further comprise a tub for storing water, the drum being rotatably provided inside the tub.

The connecting portion may be provided with a plurality of connecting bodies provided along a width direction of the first body arm, connecting the first body arm with the second body arm. The respective connecting bodies are spaced apart from each other along a longitudinal direction of the first body arm to form the path.

The connecting bodies may be provided in parallel with the width direction of the first body arm.

The connecting portion may be provided with a plurality of connecting bodies provided along the width direction of the first body arm and bent toward the rotary shaft or bent at a certain curvature toward a direction far away from the rotary shaft. The respective connecting bodies may connect the first body arm with the second body arm. The respective connecting bodies are spaced apart from each other along a longitudinal direction of the first body arm to form the path.

The connecting portion may include a first connecting body provided to be downwardly inclined from one end of both facing ends of the first body first arm toward the rotary shaft, connecting the first body arm with the second body arm. A second connecting body may be provided to be downwardly inclined from the other end of both facing ends of the first body first arm toward the rotary shaft, connecting the first body arm with the second body arm.

The first connecting body and the second connecting body may be connected with each other at one connecting point and provided in a shape of V pointed toward the rotary shaft.

The connecting portion may be provided with two or more. One connecting portion and another one connection portion may be spaced apart from each other along the longitudinal direction of the first body arm to form the path.

The first connecting body provided in one connecting portion and the first connecting body provided in the other one connecting portion may be parallel with each other. The second connecting body provided in one connecting portion and the second connecting body provided in the other one connecting portion may be parallel with each other.

A connecting point provided in one connecting portion may be provided to be located outside a space formed by connecting a free end of a first connecting body and a free end of a second connecting body, which constitute the other one connecting portion, with each other

A connecting point provided in one connecting portion may be provided to be located inside a space formed by connecting a free end of a first connecting body and a free end of a second connecting body, which constitute the other one connecting portion, with each other

The laundry treating apparatus may further comprise a rib connecting a connecting point provided in one connecting portion with a connecting point provided in the other one connecting portion, provided so as not to connect the first body arm with the second body arm.

The rib has a height set to be shorter than an interval between the first body arm and the second body arm.

The rib may be provided in at least one of the first body arm and the second body arm.

The connecting portion may include a first connecting body provided to be upwardly inclined from one end of both facing ends of the first body arm toward a direction far away from the rotary shaft, connecting the first body arm with the second body arm. The connecting portion may include a second connecting body provided to be upwardly inclined from the other end of both facing ends of the first body first arm toward the direction far away from the rotary shaft, connecting the first body arm with the second body arm.

The first connecting body and the second connecting body may be connected with each other at a connecting point and provided in a shape of V pointed toward the direction far away from the rotary shaft.

The connecting portion may include a first connecting portion, a second connecting portion and a third connecting portion, which are spaced apart from one another along the longitudinal direction of the first body first arm. The connecting point where the first and second connecting bodies constituting the first connecting portion are connected with each other may be provided to be located outside a space formed by connecting the free end of the first connecting body and the free end of the second connecting body, which constitute the second connecting portion, with each other. The connecting point where the first and second connecting bodies constituting the second connecting portion are connected with each other may be provided to be located inside the space formed by connecting the free end of the first connecting body and the free end of the second connecting body, which constitute the third connecting portion, with each other.

According to the present invention, a connector, which may minimize particles remaining therein, and a laundry treating apparatus provided with the connector may be provided.

According to the present invention, a connector, which stably transfers a rotation power provided by a motor to a drum, and a laundry treating apparatus provided with the connector may be provided.

According to the present invention, a connector, which may minimize a weight, and a laundry treating apparatus provided with the connector may be provided.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates an example of a laundry treating apparatus according to the present invention;
FIGS. 2 and 3 illustrate an example of a connector provided in the present invention; and
FIGS. 4 and 6 illustrate another examples of a connector provided in the present invention.

### DETAILED DESCRIPTION OF THE INVENTION

Reference will now be made in detail to the preferred embodiments of the present invention, examples of which are illustrated in the accompanying drawings. Meanwhile, elements or control method of apparatuses which will be described below are only intended to describe the embodiments of the present invention and are not intended to restrict the scope of the present invention. Wherever possible, the same reference numbers will be used throughout the drawings to refer to the same or like parts.

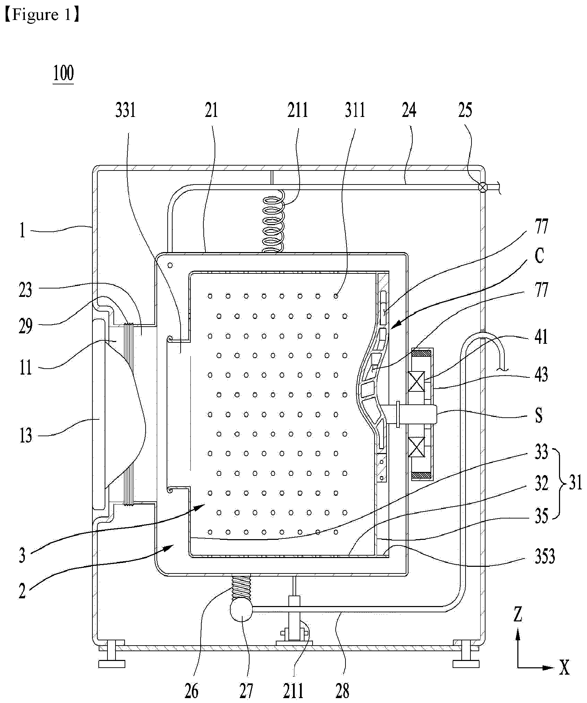

As shown in FIG. 1, a laundry treating apparatus 100 according to the present invention includes a cabinet 1, a tub 2 provided inside the cabinet 1, providing a space in which water is stored, and a drum 3 rotatably provided inside the tub, storing laundry therein.

An inlet 11, through which laundry is loaded or taken out, is provided on a front surface of the cabinet 1, and is opened or closed by a door 13 rotatably coupled to the cabinet 1.

The tub 2 may be provided with a hollow tub body 21 of a cylindrical shape, which is fixed into the cabinet 1 through a tub support unit 211. The tub support unit 211 may be provided to absorb vibration generated from the tub body 21. In this case, the tub support unit 211 may be provided with a spring connecting an upper surface of the tub body with the cabinet, and a camper connecting a lower area of the tub body with the cabinet.

A tub inlet 23 is provided on a front surface (surface located toward the inlet in the space forming the tub body) of the tub body 21, and is connected with the inlet 11 by a cylindrical gasket 29 (rubber material).

The tub body 21 is supplied with water through a water supply unit, and water stored in the tub body 21 is discharge to the outside of the cabinet 1 through a drainage unit. The water supply unit includes a water supply pipe 24 connecting a water supply source with the tub body 21, and a water supply valve 25 opening or closing the water supply pipe 24 in accordance with a control signal of a controller (not shown).

The drainage unit may be provided with a pump 27, a first drainage pipe 26 guiding the water stored in the tub body 21 to the pump 27, and a second drainage pipe 28 guiding the water discharged from the pump 27 to the outside of the cabinet 1.

The drum 3 may be provided with a hollow drum body 31 of a cylindrical shape. That is, the drum body 31 may include a circumferential surface 32 having both surfaces opened while facing each other, a first surface 33 of a disk shape fixed to the circumferential surface to form a front surface of the drum body, and a second surface 35 fixed to the circumferential surface to form a rear surface of the drum body.

The first surface 33 is provided with a drum inlet 331 allowing laundry supplied through the tub inlet 23 to enter the inside of the drum body 31. Also, a plurality of holes 311 communicating the inside of the drum body 31 with the inside of the tub body 21 are provided in the drum body 31, the first surface 33 and the second surface 35.

A rotation power provided by motors 41 and 43 is transferred to the drum 3 through a connector C. The motor may be provided with a stator 41 located outside the tub body 21, forming a rotating field, and a rotor 43 rotated by the rotating field. The stator 41 may be fixed to the rear surface of the tub body 21.

The connector C may be provided with only a rotary shaft S connecting the rotor 43 with the drum body 31. In this case, the rotary shaft S may be provided to pass through the rear surface of the tub body 21, and has one end fixed to the second surface 35 of the drum body and the other end fixed to the rotor 43.

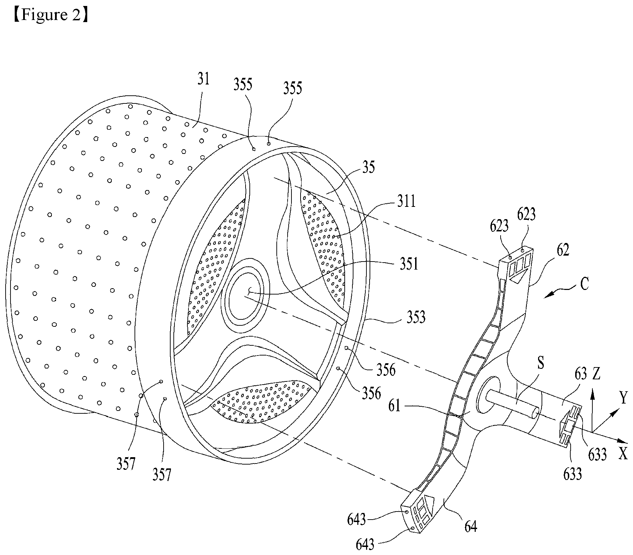

However, if the rotary shaft S is directly connected to the second surface 35 of the drum body, the second surface 35 may be damaged during rotation of the rotary shaft S. Therefore, as shown in FIG. 2, the connector C may further include a hub 61 to which the rotary shaft S is fixed, and arms 62, 63 and 64 protruded from the hub toward a rim of the second surface.

The arms may be provided as one arm or two or more arms protruded from the hub toward the rim of the second surface. If two or more arms are provided in the connector C, it is preferable that the respective arms are spaced apart from each other at the same angle based on the hub 61. FIG. 2 illustrates that three arms are provided as an example. In this case, the arms may be provided with a first arm 62, a second arm 63 and a third arm 64, which are spaced apart from one another as much as 120° based on the hub 61.

The second surface 35 may be provided with a connector accommodating groove 351 such that a rotating force provided by the connector C may easily be transferred to the drum body 31. The connector accommodating groove 351 may be provided as a groove (groove formed as the rear surface of the drum is bent to be recessed toward the front surface of the drum) formed as the second surface 35 is bent to be recessed toward the direction where the first surface 33 is located. The connector accommodating groove 351 should be provided in a shape corresponding to shapes of the hub 61 and the three arms 62, 63 and 64. Therefore, in the present invention, the rotation power provided by the motor may stably be transferred to the drum.

The drum 3 may further be provided with a fastening rib 353 to fix the connector C to the drum body 31. The fastening rib 353 may be provided as a cylindrical pipe fixed to the drum body 31 or the second surface 35, and may include a first through hole 355, a second through hole 356, and a third through hole 357.

A first fastening groove 623 may be provided in a free end of the first arm 62, a second fastening groove 633 may be provided in a free end of the second arm 63, and a third fastening groove 643 may be provided in a free end of the third arm 64. The first arm 62 may be fixed to the drum 3 by a bolt fastened to the first fastening groove 623 by passing through the first through hole 355, the second arm 63 may be fixed to the drum 3 by a bolt fastened to the second fastening groove 633 by passing through the second through hole 356, and the third arm 64 may be fixed to the drum 3 by a bolt fastened to the third fastening groove 643 by passing through the third through hole 357.

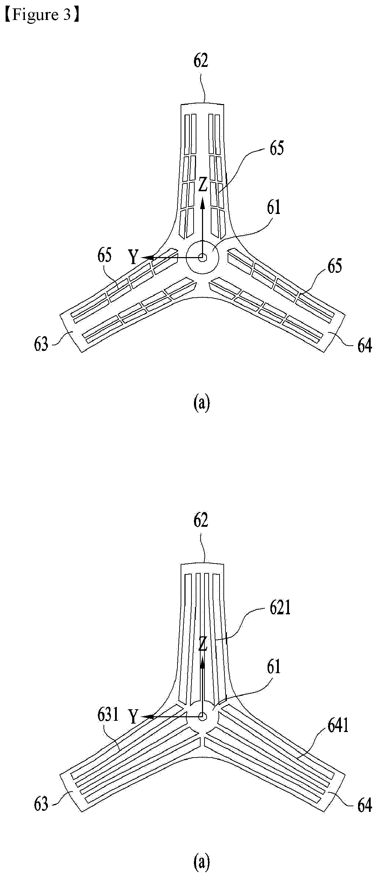

As shown in FIG. 3(a), in order to reinforce strength of the connector C, a strength reinforcing unit 65 may further be provided on a surface in the space provided by the connector, wherein the surface is in contact with the second surface 35.

The strength reinforcing unit 65 may be provided in such a manner that a plurality of boards cross one another to form a lattice structure. However, if the strength reinforcing unit 65 is provided in such a lattice structure, particles from laundry or detergent may remain in the space formed between the respective boards.

Therefore, the strength reinforcing unit 65 may be provided in a shape shown in FIG. 3(b). That is, as shown in FIG. 3(b), the strength reinforcing unit 65 may include a first arm rib 621 provided along a longitudinal direction (Z-axis direction) of the first arm 62, a second arm rib 631 provided along a longitudinal direction of the second arm 63, and a third arm rib 641 provided along a longitudinal direction of the third arm 64.

The first arm rib 621 may be provided with a plurality of boards spaced apart from one another along a width direction (Y) of the first arm 62, the second arm rib 631 may be provided with a plurality of boards spaced apart from one another along a width direction of the second arm 63, and the third arm rib 641 may be provided with a plurality of boards spaced apart from one another along a width direction of the third arm 64. Since the respective boards of the connector C according to this embodiment are provided along the longitudinal direction of each arm even though particles and the like enter the space between the respective boards, the particles and the like may be discharged to the outside of the connector C while the drum is being rotated.

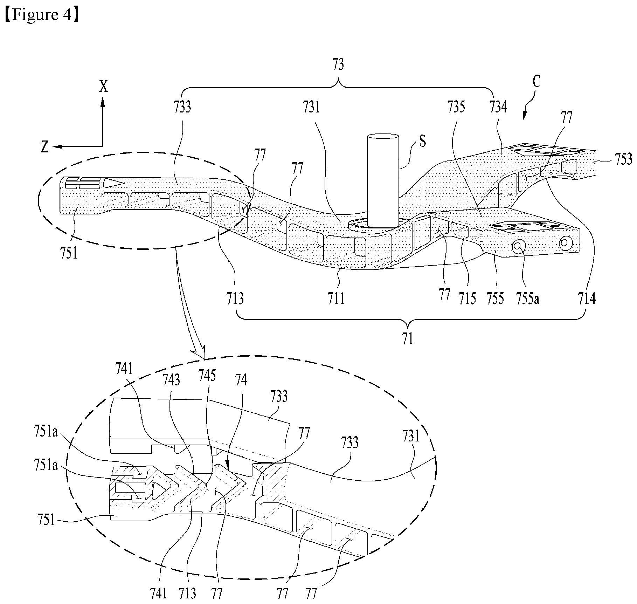

FIG. 4 illustrates another example of the connector C. The connector C according to this embodiment has a structure in which particles and the like may be washed by the water stored in the tub 2 when the drum 3 is rotated.

That is, the connector C according to this embodiment includes a first body 71 fixed to the second surface 35 (rear surface) of the drum, a second body 73 to which the rotary shaft S is fixed, and a connecting portion 74 connecting the first body 71 with the second body 73. The connecting portion 74 is a means for forming a path through which water passes to a space between the first body 71 and the second body 73 as well as maintaining the state that the first body 71 is spaced apart from the second body 73.

The first body 71 may include a first body hub 711 fixed to the second surface 35 and located in the center of rotation of the drum 3, and first body arms 713, 714 and 715 extended from the first body hub 711 toward the rim of the second surface 35.

The second body 73 may include a second body hub 731 provided to be located inside the tub 2, to which the rotary shaft 2 is fixed, and second body arms 733, 734 and 735 extended from the second body hub 731 toward the same direction where the first body arm is extended. The second body hub 731 may be provided in the same shape as that of the first body hub 711 and thus provided to be parallel with the first body hub 711.

The first body arm may be provided with only a first body first arm 713 extended from the first body hub 711 toward the rim of the second surface 35, and the second body arm may be provided with only a second body first arm 733 extended from the second body hub 731 along the direction where the first body first arm 713 is extended from the first body hub 711.

In this case, the connecting portion 74 may include a first connecting body 741 provided to be downwardly inclined from one end (left end of the first body first arm in FIG. 4) of both ends of the first body first arm 713 toward the rotary shaft S, and a second connecting body 743 provided to be downwardly inclined from the other end (right end of the first body first arm in FIG. 4) of both ends of the first body first arm 713 toward the rotary shaft S.

One end of each of the first connecting body 741 and the second connecting body 743 may be fixed to the first body first arm 713, and the other end may be provided with a board connected to the second body first arm 733.

However, one end of the first connecting body 741 and one end of the second connecting body 743 may be provided so as not to be connected with each other, or may be provided to be connected with each other at a connecting point 745. FIG. 4 illustrates that the two connecting bodies 741 and 743 meet each other at the connecting point 745, as an example. In any case, the connecting portion 74 may have a V shape pointed toward the rotary shaft S.

If the connecting portion 74 is provided in a shape of V pointed toward the rotary shaft S, the connector C may support all of a force acting on a width direction (Y-axis direction) of the first body first arm 713, a force acting on a longitudinal direction (Z-axis direction) of the first body first arm 713, and a force acting on a thickness direction (X-axis direction) of the connector. Therefore, the present invention may provide a connector C that may not only stably transfer the rotation power provided by the motor to the drum and but also has high strength.

Although not shown, the connecting portion 74 may be provided in a shape of V pointed toward a direction far away from the rotary shaft S. That is, the connecting portion 74 may include a first connecting body 741 upwardly inclined from a left end of the first body first arm 713 toward the direction far away from the rotary shaft S, and a second connecting body 743 provided to be upwardly inclined from a right end of the first body first arm 713 toward the direction far away from the rotary shaft S.

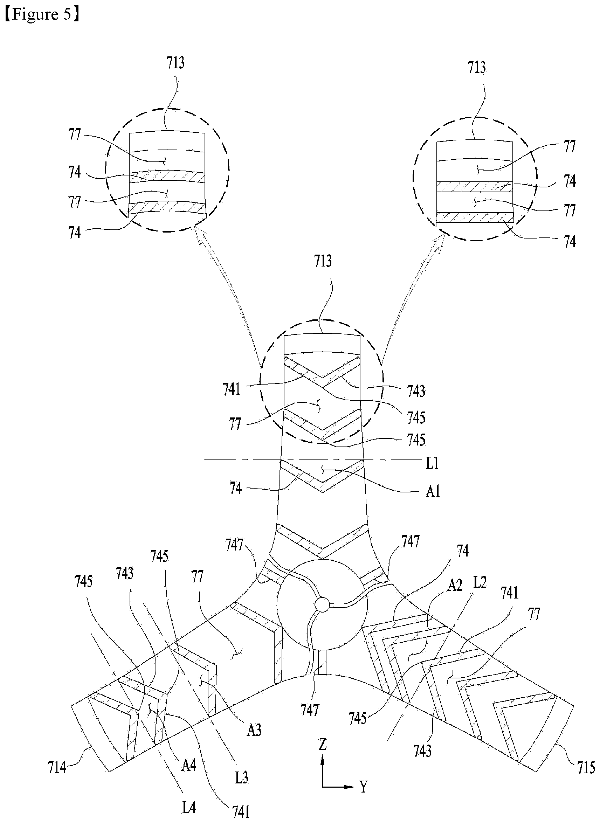

Meanwhile, as shown in FIG. 5, the connecting portion 74 may be provided as a board shaped connecting body parallel with the width direction (Y-axis direction, that is, direction orthogonal to the direction headed for the free end of the first body first arm from the rotary shaft) of the first body first arm 713.

Moreover, the connecting portion 74 may be provided along the width direction Y of the first body first arm 713, and may be provided as a board shaped connecting body bent toward a direction (-Z-axis direction) where the rotary shaft S is located or bent at a certain curvature toward a direction (+Z-axis direction) far away from the rotary shaft S.

The connecting portion 74 of the aforementioned structure may be provided with a plurality of connecting portions, each of which is preferably arranged to be spaced apart from another one along the longitudinal direction (Z-axis direction, that is, direction headed for the free end of the first body first arm from the rotary shaft) of the first body first arm 713. This is to form a path 77 through which water moves between a space between the respective connecting portions 7.

Preferably, the first connecting body provided in one connecting portion and the first connecting body provided in the other one connecting portion are parallel with each other, and the second connecting body provided in one connecting portion and the second connecting body provided in the other one connecting portion are parallel with each other. This is to enhance manufacture convenience when the connector is manufactured using a mold.

The water stored in the tub during rotation of the drum (during rotation of the rotor or during rotation of the connector) may move along the path 77 formed by the connecting portion 74. Therefore, the present invention may not only minimize particles and the like discharged from laundry remaining in the connector C but also wash the particles remaining in the connector C.

Also, the connector C of the aforementioned structure may minimize a weight of the connector due to the path 77 formed by the connecting portion 74, whereby energy to be supplied to the motor may be minimized due to the weight of the connector (energy required for rotation of the drum is minimized).

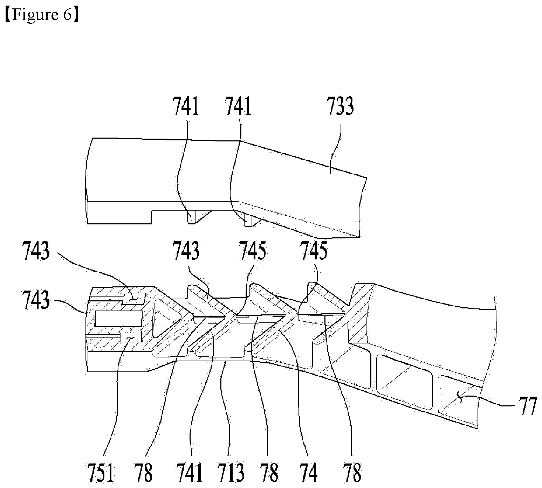

As shown in FIG. 6, the connector C may further include rib 78 provided to connect the connecting point 745 provided in one connecting portion with the connecting point 745 provided in the other one connecting portion, enhancing strength of the connector. The rib 78 is provided in at least one of the first body first arm 713 and the second body first arm 733 so as not to block the path 77. That is, the rib 78 should be provided so as not to connect the first body first arm 713 with the second body second arm 733 (a height of the rib should be set to be shorter than the interval between the first body arm and the second body arm).

Since the rib 78 is provided along the longitudinal direction of the first body first arm 713, the first body first arm 713 and the second body first arm 733 may be prevented from being bent toward the second surface 35, or may be prevented from being bent toward the direction far away from the second surface 35.

As shown in FIG. 5, in order to increase the amount of water moving through the path 77 and reduce the weight of the connector, the connecting point 745 provided in one connecting portion 74 may be provided to be located outside a space A1 formed by connecting (L1) the free end of the first connecting body with the free end of the second connecting body.

However, in order to enhance strength of the connector C while maintaining the function of the path 77, the connecting point 745 provided in one connecting portion may be provided to be located in a space A2 formed by connecting (L2) the free end of the first connecting body with the free end of the second connecting body.

Moreover, the plurality of connecting portions 74 may be provided such that the connecting point 745 located outside a space A3 formed by connecting (L3) the free end of the first connecting body with the free end of the second connecting body and the connecting point 745 located in a space A4 formed by connecting (L4) the free end of the first connecting body with the free end of the second connecting body exist.

That is, if the connecting portion is provided to include a first connecting portion, a second connecting portion and a third connecting portion, which are spaced apart from one another along the longitudinal direction of the first body first arm 713, the connecting point where the first and second connecting bodies constituting the first connecting portion are connected with each other may be provided to be located in the space A4 formed by connecting the free end of the first connecting body and the free end of the second connecting body, which constitute the second connecting portion, with each other, and the connecting point where the first and second connecting bodies constituting the second connecting portion are connected with each other may be provided to be located outside the space A3 formed by connecting the free end of the first connecting body and the free end of the second connecting body, which constitute the third connecting portion, with each other.

Meanwhile, the first body hub 711 and the second body hub 731 may be connected with each other through a hub connecting portion 747. One end of the hub connecting portion 747 may be provided with a board having one end fixed to the first body hub 711 and the other end fixed to the second body hub 731. The hub connecting portion 747 may be provided with a plurality of boards spaced apart from one another around the rotary shaft S at the same angle.

The aforementioned connector C has been described based on that the first body arm is provided with only the first body first arm 713 and the second body arm is provided with only the second body first arm 733. Hereinafter, description will be given based on that the first body arm is provided with a first body first arm 713, a first body second arm 714, and a first body third arm 715, and the second body arm is provided with a second body first arm 733, a second body second arm 734, and a second body third arm 735.

As shown in FIG. 4, the first body arm may be provided with a first body first arm 713 extended from the first body hub 711 toward the rim of the second surface 35, a first body second arm 714 extended from the first body hub 711 toward the rim of the second surface 35, and a first body third arm 715 extended from the first body hub 711 toward the rim of the second surface 35. In this case, it is preferable that the respective arms 713, 714 and 715 are spaced apart from one another around the rotary shaft S at the same angle (120°).

The second body arm may include a second body first arm 733 extended from the second body hub 731 along the same direction where the first body first arm 713 is extended from the first body hub 711, a second body second arm 734 extended from the second body hub 731 along the same direction where the first body second arm 714 is extended from the first body hub 711, and a second body third arm 735 extended from the second body hub 731 along the same direction where the first body third arm 715 is extended from the first body hub 711.

The free end of the first body first arm 713 and the free end of the second body first arm 733 are connected with each other by a first fastening body 751 which is provided with a first fastening groove 751a communicated with the first through hole 355 provided in the fastening rib 353.

Likewise, a second fastening body 753 connecting the free end of the first body second arm 714 and the free end of the second body second arm 734 is provided with a second fastening groove 753a communicated with the second through hole 356, and a third fastening body 755 connecting the free end of the first body third arm 715 and the free end of the second body third arm 735 is provided with a third fastening groove 755a communicated with the third through hole 357.

The connecting portion 74 includes a first arm connecting portion connecting the first body first arm 713 with the second body first arm 733, a second arm connecting portion connecting the first body second arm 715 with the second body second arm 734, and a third arm connecting portion connecting the first body third arm 715 with the second body third arm 735.

The structure of the first arm connecting portion, the structure of the second arm connecting portion, and the structure of the third arm connecting portion may be provided in the same manner as the structure of the connecting portion described with reference to FIGS. 4 to 6.

That is, the first arm connecting portion may be provided with first and second connecting bodies connecting the first body first arm 713 with the second body first arm 733, the second arm connecting portion may be provided with first and second connecting bodies connecting the first body second arm 714 with the second body second arm 734, and the third arm connecting portion may be provided with first and second connecting bodies connecting the first body third arm 715 with the second body third arm 735.

Although the aforementioned description is based on the front-loading type laundry treating apparatus, the present invention may be applied to a top-loading type laundry treating apparatus. In this case, the inlet 11 should be provided on the upper surface of the cabinet, the tub inlet 23 should be provide on the upper surface of the cylindrical shaped tub body, the first surface provided with the drum inlet should become the upper surface of the drum body 31, and the second surface to which the first body 71 of the connector is fixed should become the lower surface of the drum body 31.

According to one embodiment, a laundry treating apparatus comprises a drum (3) rotatably provided inside the laundry treating apparatus for storing laundry; and a connector (C) connecting the drum (3) to a motor (41, 43) for transferring a rotation power to the drum (3), wherein the connector (C) comprises a rotary shaft (S), a first body (71) having a first body hub (711) fixed to the drum (3), and at least one first body arm (713, 714, 715) extending from the first body hub (711) radially outwards; a second body (73) having a second body hub (731) fixed to the rotary shaft (S), and at least one second body arm (733, 734, 735) extending from the second body hub (731) radially outwards corresponding to the at least one first body arm (713, 714, 715); and at least one connecting portion (74) connecting the first body (71) with the second body (73) so that the first body (71) is spaced apart from the second body (73) forming paths (77) between the first body (71) and the second body (73) to allow water to pass therethrough. The rotary shaft may define an axis of rotation, i.e. the first and second body arms may extend radially outwards with respect to the axis of rotation. Preferably, the first body hub is fixed to a rear surface of the drum, i.e. a surface opposite to a drum inlet for loading or unloading laundry into the drum. The laundry treating apparatus may further comprise a tub for storing water, the drum being rotatably provided inside the tub.

Preferably, the first body arm (713, 714, 715) and the second body arm (733, 734, 735) overlap each other. The first body arm (713, 714, 715) and the second body arm (733, 734, 735) may be connected to each other by the at least one connecting portion (74). That is, the first and second body arms may be facing each other with the connecting portion in between.

A plurality of connecting portions (74) may be provided along at least one of the first body arm (713, 714, 715) and the second body arm (733, 734, 735), the connecting portions (74) being spaced apart from each other to form the paths (77).

The connecting portion (74) and/or the paths (77) may extend perpendicular to the axis of rotation defined by the rotary shaft (S). That is, the connecting portion (74) and/or the paths (77) may extend perpendicular to a radial direction. Preferably, the connecting portion (74) and/or the paths (77) extend along a width direction of the first and/or second body arm (713, 714, 715; 733, 734, 735), e.g. in a plane perpendicular to the axis of rotation.

The at least one connecting portion (74) may respectively have one of a linear shape, a V shape, a Y shape and a bent shape.

The at least one connecting portion (74) may respectively have a V shape or bent shape pointing towards or away from the rotary shaft (S). The connecting portion (74) may include a first connecting body (741) and a second connecting body (743) connected to each other at a connecting point (745) to form a V shape. The first and second connecting bodies may have a linear shape. Preferably, connecting portions (74) closer to the axis of rotation have a V shape or bent shape pointing towards the rotary shaft (S). Alternatively or additionally, connecting portions (74) farther from the axis of rotation may have a V shape or bent shape pointing away from the rotary shaft (S).

Two or more connecting portions (74) may be provided spaced apart from each other along the first or second body arm (713, 714, 715; 733, 734, 735) defining one of the paths (77) inbetween. Each of the connecting portions (74) may include a first connecting body (741) and a second connecting body (743) connected to each other at a connecting point (745) to form a V shape. First connecting bodies (741) of adjacent connecting portions (74) may be parallel to each other and/or second connecting bodies (743) of adjacent connecting portions (74) may be parallel to each other.

A connecting point (745) of one connecting portion (74) may be located outside or inside a space formed by connecting free ends of the first and second connecting bodies (741, 743) of another connecting portion (74), the one connecting portion (74) being adjacent to and pointing towards the other connecting portion (74).

A connecting point (745) of a first connecting portion (74) may be located outside a space formed by connecting free ends of the first and second connecting bodies (741, 743) of a second connecting portion (74), the first connecting portion (74) being adjacent to and pointing towards the second connecting portion (74). Alternatively or additionally, a connecting point (745) of a third connecting portion (74) may be located inside a space formed by connecting free ends of the first and second connecting bodies (741, 743) of a fourth connecting portion (74), the third connecting portion (74) being adjacent to and pointing towards the fourth connecting portion (74). Preferably, the first and second connecting portions (74) are arranged closer to the first or second body hub (711, 731) than the third connecting portion (74) along the first or second body arm (713, 714, 715; 733, 734, 735).

At least one rib (78) may be protruding from at least one of the first body arm (713, 714, 715) and the second body arm (733, 734, 735) into at least one of the paths (77).

The rib (78) may have a height smaller than a space between the first body arm (713, 714, 715) and the second body arm (733, 734, 735).

The connecting portion (74) may include a first connecting body (741) and a second connecting body (743) connected to each other at a connecting point (745) to form a V shape. Then, the rib (78) may extend from the connecting point (745) between the first connecting body (741) and the second connecting body (743), e.g. along a radial direction. Preferably, the rib (78) may connect connecting points (745) of adjacent connecting portions (74). The rib (78) may extend along a radial direction. The rib (78) may be arranged between adjacent connecting portions (74) with a height increasing towards the first or second body hub (711, 731).

It will be apparent to those skilled in the art that the present invention may be embodied in other specific forms without departing from the essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

## Claims

1. A laundry treating apparatus comprising:
a drum (3) rotatably provided inside the laundry treating apparatus for storing laundry; and
a connector (C) connecting the drum (3) to a motor (41, 43) for transferring a rotation power to the drum (3),
the connector (C) comprising:
a rotary shaft (S);
a first body (71) having a first body hub (711) fixed to the drum (3), and at least one first body arm (713, 714, 715) extending from the first body hub (711) radially outwards;
a second body (73) having a second body hub (731) fixed to the rotary shaft (S), and at least one second body arm (733, 734, 735) extending from the second body hub (731) radially outwards corresponding to the at least one first body arm (713, 714, 715); and
connecting portions (74) connecting the first body (71) with the second body (73) so that the first body (71) is spaced apart from the second body (73),
**characterized in that** the connecting portions (74) are spaced apart from each other along the longitudinal direction of the first body arm (713, 714, 715) to allow water to pass therebetween.

2. The laundry treating apparatus of claim 1, wherein the first body arm (713, 714, 715) and the second body arm (733, 734, 735) overlap each other and are connected to each other by the at least one connecting portion (74).

3. The laundry treating apparatus of claim 1 or 2, wherein the connecting portions (74) are spaced apart from each other to form paths (77) between the first body (71) and the second body (73) to allow water to pass therethrough.

4. The laundry treating apparatus according to any one of the preceding claims, wherein the connecting portion (74) and/or the paths (77) extend perpendicular to the axis of rotation defined by the rotary shaft (S), and/or wherein the connecting portion (74) and/or the paths (77) extend along a width direction of the first and/or second body arm (713, 714, 715; 733, 734, 735).

5. The laundry treating apparatus according to any one of the preceding claims, wherein the at least one connecting portion (74) respectively has one of a linear shape, a V shape, a Y shape and a bent shape pointing towards or away from the rotary shaft (S).

6. The laundry treating apparatus according to any one of the preceding claims, wherein two or more connecting portions (74) are provided spaced apart from each other along the first or second body arm (713, 714, 715; 733, 734, 735) defining one of the paths (77) inbetween,
wherein each of the connecting portions (74) includes a first connecting body (741) and a second connecting body (743) connected to each other at a connecting point (745) to form a V shape.

7. The laundry treating apparatus of claim 6, wherein first connecting bodies (741) of adjacent connecting portions (74) are parallel to each other and/or second connecting bodies (743) of adjacent connecting portions (74) are parallel to each other.

8. The laundry treating apparatus of claim 6 or 7, wherein a connecting point (745) of one connecting portion (74) is located outside or inside a space formed by connecting free ends of the first and second connecting bodies (741, 743) of another connecting portion (74), the one connecting portion (74) being adjacent to and pointing towards the other connecting portion (74).

9. The laundry treating apparatus of claim 6 or 7, wherein a connecting point (745) of a first connecting portion (74) is located outside a space formed by connecting free ends of the first and second connecting bodies (741, 743) of a second connecting portion (74), the first connecting portion (74) being adjacent to and pointing towards the second connecting portion (74), and
wherein a connecting point (745) of third connecting portion (74) is located inside a space formed by connecting free ends of the first and second connecting bodies (741, 743) of a fourth connecting portion (74), the third connecting portion (74) being adjacent to and pointing towards the fourth connecting portion (74), the first and second connecting portions (74) being arranged closer to the first or second body hub (711, 731) than the third connecting portion (74) along the first or second body arm (713, 714, 715; 733, 734, 735).

10. The laundry treating apparatus according to any one of the preceding claims, further comprising at least one rib (78) protruding from at least one of the first body arm (713, 714, 715) and the second body arm (733, 734, 735) into at least one of the paths (77).

11. The laundry treating apparatus of claim 10, wherein the rib (78) has a height smaller than a space between the first body arm (713, 714, 715) and the second body arm (733, 734, 735).

12. The laundry treating apparatus of claim 10 or 11, wherein the connecting portion (74) includes a first connecting body (741) and a second connecting body (743) connected to each other at a connecting point (745) to form a V shape, and the rib (78) extends from the connecting point (745) between the first connecting body (741) and the second connecting body (743) to a connecting point (745) of an adjacent connecting portion (74).

13. The laundry treating apparatus of claim 10, 11 or 12, wherein the rib (78) extends along a radial direction and/or is arranged between adjacent connecting portions (74) with a height increasing towards the connecting portion (74) being closer to the first or second body hub (711, 731).

14. The laundry treating apparatus according to any one of the preceding claims, wherein the connecting portions (74) are spaced apart from each other to allow water to pass across the first body arm (713, 714, 715) and the second body arm (733, 734, 735).

15. The laundry treating apparatus according to any one of the preceding claims, wherein the connecting portions (74) and the paths (77) are extended across a longitudinal direction of the first body arm (713, 714, 715) and the second body arm (733, 734, 735).

## Patentansprüche

1. Wäschebehandlungsvorrichtung, umfassend:
eine Trommel (3), die drehbar innerhalb der Wäschebehandlungsvorrichtung zum Aufnehmen von Wäsche bereitgestellt ist; und
einen Verbinder (C), der die Trommel (3) mit einem Motor (41, 43) verbindet, um eine Drehkraft auf die Trommel (3) zu übertragen,
wobei der Verbinder (C) umfasst:
eine Drehwelle (S);
einen ersten Körper (71), der eine erste Körpernabe (711) aufweist, die an der Trommel (3) befestigt ist, und mindestens einen ersten Körperarm (713, 714, 715), der sich von der ersten Körpernabe (711) radial nach außen erstreckt;
einen zweiten Körper (73), der eine zweite Körpernabe (731) aufweist, die an der Drehwelle (S) befestigt ist, und mindestens einen zweiten Körperarm (733, 734, 735), der sich von der zweiten Körpernabe (731) radial nach außen erstreckt und dem mindestens einen ersten Körperarm (713, 714, 715) entspricht; und
Verbindungsabschnitte (74), die den ersten Körper (71) mit dem zweiten Körper (73) verbinden, so dass der erste Körper (71) von dem zweiten Körper (73) beabstandet ist,
**dadurch gekennzeichnet, dass** die Verbindungsabschnitte (74) entlang der Längsrichtung des ersten Körperarms (713, 714, 715) voneinander beabstandet sind, damit Wasser dazwischen passieren kann.

2. Wäschebehandlungsvorrichtung nach Anspruch 1, wobei der erste Körperarm (713, 714, 715) und der zweite Körperarm (733, 734, 735) einander überlappen und durch den mindestens einen Verbindungsabschnitt (74) miteinander verbunden sind.

3. Vorrichtung zur Behandlung von Wäsche nach Anspruch 1 oder 2, wobei die Verbindungsabschnitte (74) voneinander beabstandet sind, um Pfade (77) zwischen dem ersten Körper (71) und dem zweiten Körper (73) zu bilden, damit Wasser durch diese passieren kann.

4. Wäschebehandlungsvorrichtung nach einem der vorstehenden Ansprüche, wobei der Verbindungsabschnitt (74) und/oder die Pfade (77) sich senkrecht zu der durch die Drehwelle (S) definierten Drehachse erstrecken und/oder wobei der Verbindungsabschnitt (74) und/oder die Pfade (77) sich entlang einer Breitenrichtung des ersten und/oder zweiten Körperarms (713, 714, 715; 733, 734, 735) erstrecken.

5. Wäschebehandlungsvorrichtung nach einem der vorstehenden Ansprüche, wobei der mindestens eine Verbindungsabschnitt (74) jeweils eine lineare Form, eine V-Form, eine Y-Form oder eine gebogene Form aufweist, die zur Drehwelle (S) hin oder von ihr weg zeigt.

6. Wäschebehandlungsvorrichtung nach einem der vorstehenden Ansprüche, wobei zwei oder mehr Verbindungsabschnitte (74) beabstandet voneinander entlang des ersten oder zweiten Körperarms (713, 714, 715; 733, 734, 735) bereitgestellt sind, die einen der Pfade (77) dazwischen definieren,
wobei jeder der Verbindungsabschnitte (74) einen ersten Verbindungskörper (741) und einen zweiten Verbindungskörper (743) beinhaltet, die an einem Verbindungspunkt (745) miteinander verbunden sind, um eine V-Form zu bilden.

7. Wäschebehandlungsvorrichtung nach Anspruch 6, wobei erste Verbindungskörper (741) benachbarter Verbindungsabschnitte (74) parallel zueinander sind und/oder zweite Verbindungskörper (743) benachbarter Verbindungsabschnitte (74) parallel zueinander sind.

8. Wäschebehandlungsvorrichtung nach Anspruch 6 oder 7, wobei sich ein Verbindungspunkt (745) eines Verbindungsabschnitts (74) außerhalb oder innerhalb eines Raums befindet, der durch die Verbindung freier Enden der ersten und zweiten Verbindungskörper (741, 743) eines anderen Verbindungsabschnitts (74) gebildet wird, wobei der eine Verbindungsabschnitt (74) an den anderen Verbindungsabschnitt (74) angrenzt und auf diesen zeigt.

9. Wäschebehandlungsvorrichtung nach Anspruch 6 oder 7, wobei ein Verbindungspunkt (745) eines ersten Verbindungsabschnitts (74) außerhalb eines Raums liegt, der durch die Verbindung freier Enden der ersten und zweiten Verbindungskörper (741, 743) eines zweiten Verbindungsabschnitts (74) gebildet wird, wobei der erste Verbindungsabschnitt (74) an den zweiten Verbindungsabschnitt (74) angrenzt und zu diesem zeigt, und
wobei ein Verbindungspunkt (745) des dritten Verbindungsabschnitts (74) innerhalb eines Raums angeordnet ist, der durch Verbinden freier Enden der ersten und zweiten Verbindungskörper (741, 743) eines vierten Verbindungsabschnitts (74) gebildet wird, wobei der dritte Verbindungsabschnitt (74) an den vierten Verbindungsabschnitt (74) angrenzt und zu diesem zeigt, wobei die ersten und zweiten Verbindungsabschnitte (74) näher an der ersten oder zweiten Körpernabe (711, 731) angeordnet sind als der dritte Verbindungsabschnitt (74) entlang des ersten oder zweiten Körperarms (713, 714, 715; 733, 734, 735).

10. Wäschebehandlungsvorrichtung nach einem der vorstehenden Ansprüche, umfassend weiterhin mindestens eine Rippe (78), die von mindestens einem der beiden Körperarme (713, 714, 715) und dem zweiten Körperarm (733, 734, 735) in mindestens einen der Pfade (77) ragt.

11. Wäschebehandlungsvorrichtung nach Anspruch 10, wobei die Rippe (78) eine Höhe aufweist, die kleiner ist als ein Abstand zwischen dem ersten Körperarm (713, 714, 715) und dem zweiten Körperarm (733, 734, 735).

12. Wäschebehandlungsvorrichtung nach Anspruch 10 oder 11, wobei der Verbindungsabschnitt (74) einen ersten Verbindungskörper (741) und einen zweiten Verbindungskörper (743) beinhaltet, die an einem Verbindungspunkt (745) miteinander verbunden sind, um eine V-Form zu bilden, und die Rippe (78) sich von dem Verbindungspunkt (745) zwischen dem ersten Verbindungskörper (741) und dem zweiten Verbindungskörper (743) zu einem Verbindungspunkt (745) eines benachbarten Verbindungsabschnitts (74) erstreckt.

13. Wäschebehandlungsvorrichtung nach Anspruch 10, 11 oder 12, wobei sich die Rippe (78) entlang einer radialen Richtung erstreckt und/oder zwischen benachbarten Verbindungsabschnitten (74) angeordnet ist, wobei die Höhe in Richtung des Verbindungsabschnitts (74) zunimmt, der näher an der ersten oder zweiten Körpernabe (711, 731) liegt.

14. Wäschebehandlungsvorrichtung nach einem der vorstehenden Ansprüche, wobei die Verbindungsabschnitte (74) voneinander beabstandet sind, damit Wasser über den ersten Körperarm (713, 714, 715) und den zweiten Körperarm (733, 734, 735) fließen kann.

15. Wäschebehandlungsvorrichtung nach einem der vorstehenden Ansprüche, wobei die Verbindungsabschnitte (74) und die Pfade (77) sich über eine Längsrichtung des ersten Körperarms (713, 714, 715) und des zweiten Körperarms (733, 734, 735) erstrecken.

## Revendications

1. Appareil de traitement du linge, comprenant :
un tambour (3) disposé de manière à pouvoir tourner à l'intérieur de l'appareil de traitement du linge, destiné à recevoir du linge ; et
un connecteur (C) reliant le tambour (3) à un moteur (41, 43), destiné à transmettre une puissance de rotation au tambour (3),
le connecteur (C) comprenant :
un arbre rotatif (S) ;
un premier corps (71) comportant un moyeu (711) de premier corps fixé au tambour (3), et au moins un bras (713, 714, 715) de premier corps s'étendant radialement vers l'extérieur à partir du moyeu (711) de premier corps ;
un deuxième corps (73) comportant un moyeu (731) de deuxième corps fixé à l'arbre rotatif (S), et au moins un bras (733, 734, 735) de deuxième corps s'étendant radialement vers l'extérieur à partir du moyeu (731) de deuxième corps, correspondant audit au moins un bras (713, 714, 715) de premier corps ; et
des parties de connexion (74) reliant le premier corps (71) au deuxième corps (73) de sorte que le premier corps (71) est espacé du deuxième corps (73),
**caractérisé en ce que** les parties de connexion (74) sont espacées les uns des autres le long de la direction longitudinale du bras (713, 714, 715) de premier corps afin de permettre le passage d'eau entre celles-ci.

2. Appareil de traitement du linge selon la revendication 1, dans lequel le bras (713, 714, 715) de premier corps et le bras (733, 734, 735) de deuxième corps se chevauchent et sont reliés l'un à l'autre par ladite au moins une partie de connexion (74).

3. Appareil de traitement du linge selon la revendication 1 ou 2, dans lequel les parties de connexion (74) sont espacées les unes autres pour former des chemins (77) entre le premier corps (71) et le deuxième corps (73) afin de permettre le passage d'eau à travers ces derniers.

4. Appareil de traitement du linge selon l'une quelconque des revendications précédentes, dans lequel la partie de connexion (74) et/ou les chemins (77) s'étendent perpendiculairement à l'axe de rotation défini par l'arbre rotatif (S), et/ou dans lequel la partie de connexion (74) et/ou les chemins (77) s'étendent le long d'une direction de la largeur du bras (713, 714, 715 ; 733, 734, 735) de premier et/ou deuxième corps.

5. Appareil de traitement du linge selon l'une quelconque des revendications précédentes, dans lequel ladite au moins une partie de connexion (74) a respectivement l'une parmi une forme linéaire, une forme en V, une forme en Y et une forme courbée dirigée vers ou s'éloignant de l'arbre rotatif (S).

6. Appareil de traitement du linge selon l'une quelconque des revendications précédentes, dans lequel deux ou plus de deux parties de connexion (74) sont disposées en étant espacées l'une de l'autre/les unes des autres le long du bras (713, 714, 715 ; 733, 734, 735) de premier et/ou deuxième corps, en définissant l'un des chemins (77) entre elles,
chacune des parties de connexion (74) incluant un premier corps de connexion (741) et un second corps de connexion (743) reliés l'un à l'autre au niveau d'un point de connexion (745) pour former une forme en V.

7. Appareil de traitement du linge selon la revendication 6, dans lequel les premiers corps de connexion (741) de parties de connexion (74) adjacentes sont parallèles entre eux et/ou les seconds corps de connexion (743) de parties de connexion (74) adjacentes sont parallèles entre eux.

8. Appareil de traitement du linge selon la revendication 6 ou 7, dans lequel un point de connexion (745) d'une partie de connexion (74) est situé à l'extérieur ou à l'intérieur d'un espace formé par les extrémités libres de connexion des premier et second corps de connexion (741, 743) d'une autre partie de connexion (74), l'une des parties de connexion (74) étant adjacente à et dirigée vers l'autre partie de connexion (74).

9. Appareil de traitement du linge selon la revendication 6 ou 7, dans lequel un point de connexion (745) d'une première partie de connexion (74) est situé à l'extérieur d'un espace formé par les extrémités libres de connexion des premier et second corps de connexion (741, 743) d'une deuxième partie de connexion (74) la première partie de connexion (74) étant adjacente à et dirigée vers la deuxième partie de connexion (74), et
dans lequel un point de connexion (745) de troisième partie de connexion (74) est situé à l'intérieur d'un espace formé par les extrémités libres de connexion des premier et second corps de connexion (741, 743) d'une quatrième partie de connexion (74) la troisième partie de connexion (74) étant adjacente à et dirigée vers la quatrième partie de connexion (74), les première et deuxième parties de connexion (74) étant disposées en étant plus proches du moyeu (711, 731) de premier ou deuxième corps que la troisième partie de connexion (74) le long du bras (713, 714, 715 ; 733, 734, 735) de premier et/ou deuxième corps.

10. Appareil de traitement du linge selon l'une quelconque des revendications précédentes, comprenant au moins une nervure (78) faisant saillie à partir d'au moins un parmi le bras (713, 714, 715) de premier corps et le bras (733, 734, 735) de deuxième corps dans au moins un des chemins (77).

11. Appareil de traitement du linge selon la revendication 10, dans lequel la nervure (78) a une hauteur plus petite qu'un espace entre le bras (713, 714, 715) de premier corps et le bras (733, 734, 735) de deuxième corps.

12. Appareil de traitement du linge selon la revendication 10 ou 11, dans lequel la partie de connexion (74) inclut un premier corps de connexion (741) et un deuxième corps de connexion (743) reliés l'un à l'autre au niveau d'un point de connexion (745) pour former une forme en V, et la nervure (78) s'étend du point de connexion (745) entre le premier corps de connexion (741) et le deuxième corps de connexion (743) à un point de connexion (745) d'une partie de connexion (74) adjacente.

13. Appareil de traitement du linge selon la revendication 10, 11 ou 12, dans lequel la nervure (78) s'étend le long d'une direction radiale et/ou est disposée entre des parties de connexion (74) adjacentes avec une hauteur augmentant vers le point de connexion (74) qui est plus proche du moyeu (711, 731) de premier ou deuxième corps.

14. Appareil de traitement du linge selon l'une quelconque des revendications précédentes, dans lequel les parties de connexion (74) sont espacées les unes des autres afin de permettre le passage d'eau à travers le bras (713, 714, 715) de premier corps et le bras (733, 734, 735) de deuxième corps.

15. Appareil de traitement du linge selon l'une quelconque des revendications précédentes, dans lequel les parties de connexion (74) et les chemins (77) sont étendus à travers une direction longitudinale du bras (713, 714, 715) de premier corps et du bras (733, 734, 735) de deuxième corps.
